# EUROPÄISCHE PATENTSCHRIFT

(11) **EP 1 076 746 B1**
(45) Veröffentlichungstag und Bekanntmachung des Hinweises auf die Patenterteilung: **25.09.2002**
(21) Anmeldenummer: 99909467.5
(22) Anmeldetag: 18.03.1999
(51) Int. Cl.: E05C 19/18, E05C 1/02, A47F 3/12, A47B 96/00, E04B 2/82, F16B 2/06

(54) **BEFESTIGUNGSELEMENT ZUR BEFESTIGUNG VON FLÄCHENMATERIALEN UND VERFAHREN ZUR BEFESTIGUNG VON FLÄCHENMATERIALEN**
FASTENING ELEMENT FOR FASTENING FLAT MATERIALS AND A METHOD FOR FASTENING FLAT MATERIALS
ELEMENT DE FIXATION POUR FIXER DES MATERIAUX PLATS ET PROCEDE DE FIXATION DESDITS MATERIAUX

(30) Priorität: 03.04.1998 SK 44198
(43) Veröffentlichungstag der Anmeldung: 21.02.2001
(73) Patentinhaber: Cervenko, Jozef, Dipl.-Ing., 821 08 Bratislava (SK)
(72) Erfinder: Cervenko, Jozef, Dipl.-Ing., 821 08 Bratislava (SK)
(74) Vertreter: Weisse, Jürgen, Dipl.-Phys.
(86) Internationale Anmeldenummer: SK9900004
(87) Internationale Veröffentlichungsnummer: WO99051842

(56) Entgegenhaltungen:
- EP-A- 0 330 599
- WO-A-94/09236
- DE-A- 3 704 889
- DE-A- 4 335 387
- FR-A- 2 416 316
- US-A- 3 039 161
- US-A- 3 481 572
- US-A- 5 547 236

## Beschreibung

### Bereich der Technik

Die Erfindung bezieht sich auf ein universelles Befestigungselement zur Befestigung von Flächenmaterialien jeder Art ohne Beschädigung der Oberfläche des Flächenmaterials, wobei dieses Befestigungselement eine leichte Montage des Flächenmaterials in einer Trägerbasis (Basis) ermöglicht. Die Trägerbasis kann dabei auch von allen Seiten umgrenzt sein und z.B. einen beliebigen Rahmen wie einen Laderaumrahmen oder eine Vitrine usw. bilden.

### Stand der Technik

In der Gegenwart sind derartige Befestigungskonstruktionen von Flächenmaterialien bekannt, bei denen das zu befestigende Flächenmaterial in die Nut des Klemmvorrichtungskörpers längsweise frei eingelegt wird, so daß das Befestigungselement-Flächenmaterial nur im Falle der Demontage der Montageeinheit aus der Trägerbasis entfernt werden kann. Ferner werden zur Befestigung von Flächenmaterialien diverse Absatzleisten verwendet.

Andererseits sind verschiedene Ausführungen von Profilbefestigungselementen z.B. laut CS AO 246067 bzw. CS AO 264408 und US 3 039 161 bekannt, bei denen die erwähnten Profilbefestigungselemente ohne Demontage des Trägergerüstes (Trägerbasis) das Abnehmen des Flächenmaterials nicht ermöglichen. Das zu befestigende Flächenmaterial wird dabei meistens beschädigt oder deformiert. Alle diese Befestigungselemente verursachen eine unvermeidbare Materialverletzung.

Es sind verschiedene Befestigungsschellen nach CS AO 242952 und andere Befestigungen nach EP 0 859 092 A2, EP 0 838 986 AS, DE 44 18 741 A1, DE 36 16 210 A1, DE 34 01 289 A1 sowie Verbindungsmittel verschiedener Art zum Bau von Stellagen, Möbelstücken z.B. nach dem CS Pat. 244 927,CS AO 237852, CS AO 251103 CS AO 251104, CS AO 248101,CS AO 244443 oder Greifinittel nach CS AO 242459 bekannt.

Es sind weiter nach EP 0 330 599, DE 37 04889 A und DE 43 35 387 verschiedene Befestigungselemente bekannt, bei denen der Klemmvorrichtungskörper mit der Trägerbasis (Konstruktion), an der das Flächenmaterial befestigt werden soll, fest verbunden sein muß oder umgekehrt Befestigungselemente nach US 3 481 572 A, FR 2 416 316, bei denen der Klemmvorrichtungskörper in der Trägerbasis nicht befestigt ist. Es sind nach dem WO 94/09236,05 und US 5 547236 Klemmvorrichtungen bekannt, die für einen speziellen Zweck verwendet werden z.B. zur Befestigung an Türen.

### Offenbarung der Erfindung

Das erfindungsgemäße Befestigungselement behebt alle diese bisher bekannten Nachteile von Befestigungselementen von Flächenmaterialien: es ermöglicht die Einschiebung und Befestigung des Flächenmaterials zusammen mit dem Klemmvorrichtungskörper in die Trägerbasis, die von allen Seiten einen Raum abgrenzt (ein Laderaumrahmen wie z.B. Vitrine u.s.w.), ohne Beschädigung der Oberfläche. Das erfindungsgemäße Befestigungselement ermöglicht eine leichte Handhabung, insbesondere das Entfernen und das Austauschen des Flächenmaterials z.B. einer Scheibenglaswand aus der Trägerbasis ohne notwendige Demontage.

Das erfindungsgemäße Befestigungselement zur Befestigung von Flächenmaterialien gemäß dem unabhängigen Anspruch (weiter nur Befestigungselement) besteht aus einem speziellen Klemmvorrichtungskörper von u-förmigem Querschnitt, einem speziellen Einsatzstück und aus den Anpresselementen, mit welchen das Einsatzstück auf das Flächenmaterial gepreßt wird. Das Flächenmaterial wird zwischen dem Einsatzstück und dem Klemmvorrichtungskörper untergebracht.

Der u-förmige Klemmvorrichtungskörper ist derart konstruiert, daß eine von seinen Seiten, vorzugsweise die kürzere, mit einer oder mehreren Öffnungen für die Anpresselemente und mit einem zur anderen Seitenwange hin abgewinkelten Rand versehen ist. Der Klemmvorrichtungskörper ist in seinem Übergangsteil zwischen den beiden Seiten mit einer oder mehreren Lücken zum Einlegen von Befestigungsansätzen des Einsatzstücks versehen.

Das Einsatzstück weist einen abgewinkelten Rand auf, unter dem sich eine Anschlagnase und ein oder mehrere Befestigungsanschläge befinden. Die Anschlagnase des Einsatzstücks und der abgewinkelte Rand stehen zur gleichen Seite hin von dem Anschlagstück vor. Die Anschlagnase gewährleistet, daß das Einsatzstück aus dem Klemmvorrichtungskörper nicht unbeabsichtigt herausfällt. Der Befestigungsansatz hat zwei Funktionen, einerseits dient er zur Absicherung des Systems "Befestigungselement-Flächenmaterial" als solches, andererseits zur Befestigung des Systems "Befestigungselement-Flächenmaterial" an der Trägerbasis (Konstruktion), die mit der Lücke bzw. Nut zum Einlegen des Befestigungsanschlags versehen ist.

In abgesicherter Lage des Befestigungselements wird der Befestigungsanschlag in die für den Befestigungsanschlag geschaffene Lücke und die Anpresselemente in die für die Anpresselemente geschaffenen Lücken im Klemmvorrichtungskörper derart eingefahren, daß die Anpresselemente das Flächenmaterial, das zwischen der Seite des Einsatzstücks und der Seite des Klemmvorrichtungskörpers plaziert ist, einklemmen. Das eingeklemmte Flächenmaterial zwischen der Seite des Einsatzstücks und der Seite des Klemmvorrichtungskörpers fixiert das Flächenmaterial in dem Befestigungselement, was mittels einfachen Anpressens der Anpresselemente durch die für die Anpresselemente geschaffenen Lücken erfolgt - z.B. durch das Aufschrauben von - mit einem Gewinde versehenen - Anpresselementen oder mittels linearen exzentrischen Einrückens.

In nicht abgesicherter Lage des Befestigungselements befindet sich die Anschlagnase des Einsatzstücks in der Position, in welcher die Anschlagnase von der inneren Seite des abgewinkelten Randes her den Klemmvorrichtungskörper berührt.

Das Befestigungselement ermöglicht eine umfangreiche Ausnutzung mit der Möglichkeit des einfachen und besonders schadenfreien und die Oberfläche des Flächenmaterials nicht beschädigenden Austauschs bzw. der Entfernung des Flächenmaterials.

Die Befestigung von Flächenmaterialien an der Trägerbasis ist besonders einfach und erfolgt, ohne die Oberfläche des Flächenmaterials zu beschädigen. Dabei wird das zu befestigende Flächenmaterial zwischen die Seite des Einsatzstücks und die Seite des Klemmvorrichtungskörpers eingelegt und danach z.B. durch Einschrauben der Anpresselemente in die Löcher des Klemmvorrichtungskörpers angepresst.

Wie schon einmal oben erwähnt, wird der Klemmvorrichtungskörper derart ausgebildet, daß eine von seinen Seiten, vorzugsweise die kürzere Seite, mit einem oder mehreren Durchbrüchen für den Befestigungsansatz des Einsatzstücks und mit dem zur anderen Seite abgewinkelten Rand versehen ist, der die Bewegung des Einsatzstücks derart einschränkt, daß sein Herausfallen aus dem Klemmvorrichtungskörper nicht möglich ist. Das Einsatzstück des Klemmvorrichtungskörpers weist, je nach Länge des Klemmvorrichtungskörpers und des Einsatzstücks einen bzw. mehrere Befestigungsansätze auf, gewöhnlich einen. Die Befestigung der Montageeinheit "Befestigungselement - Flächenmaterial" erfolgt durch das Einlegen des Befestigungsansatzes des Einsatzstücks in die für das Einsatzstück gestaltete Loch des Klemmvorrichtungskörpers und nachfolgend durch z.B. das Einschrauben der Anpresselemente. Die Befestigung des Flächenmaterials an der Trägerbasis erfolgt durch das Einlegen des Befestigungsansatzes des Einsatzstücks in das Loch der so gebildeten unbeweglichen Montageeinheit. Das zu befestigende Flächenmaterial, zusammen mit dem Befestigungselement ist leicht von dieser Trägerbasis zu entfernen, ohne die Oberfläche oder andere Teile des Flächenmaterials zu beschädigen und ohne Notwendigkeit, die gesamte Befestigungskonstruktion zu demontieren. Die Demontage erfolgt in einem umgekehrten Vorgang wie bei der Befestigung der Montageeinheit "Befestigungselement - Flächenmaterial". Das Einsatzstück des Befestigungselements wird in eine solche Lage gestellt, daß die Anschlagnase an der unteren Seite des abgewinkelten Randes des Klemmvorrichtungskörpers anliegt.

Das Befestigungselement kann rechtsseitig oder linksseitig ausgebildet sein, je nach Situierung des Befestigungsansatzes an dem Einsatzstück des Befestigungselements.

Die Handhabung des Befestigungselements ist sehr einfach. Der Klemmvorrichtungskörper wird auf ein beliebiges Flächenmaterial aufgeschoben, bzw. ein beliebiges Flächenmaterial in den Klemmvorrichtungskörper eingelegt, wonach das Einsatzstück zwischen den Klemmvorrichtungskörper und das beliebige Flächenmaterial eingeschoben wird, so daß seine Anschlagnase aus dem Flächenmaterial herauszeigt. Zuletzt installiert man die Anpresselemente z.B. Schrauben in den zum Einführen vorgesehenen Löchern und spannt diese z.B. durch den Schraubvorgang unter Anwendung entsprechender Kraft so, daß die Anpresselemente die Fläche des Einsatzstücks fest an das Flächenmaterial pressen. Dadurch wird das Flächenmaterial einerseits durch die Seite des Klemmvorrichtungskörpers und andererseits durch die Seite des Einsatzstückes fest eingeklemmt. Das Einsatzstück befindet sich in der Position, in welcher der Befestigungsansatz in einen für ihn geschaffenen Durchbruch derart eingefahren ist, daß er aus dem Loch hinausragt. Dadurch wird die Montageeinheit "Befestigungselement - Flächenmaterial" gegen die selbständige Bewegung des Flächenmaterials gesichert. Mittels des, in den für diesen Zweck beliebig geschaffenen Durchbruch eingefahrenen, Befestigungsansatzes des Einsatzstücks, wird die Montageeinheit "Befestigungselement - Flächenmaterial" gegen die selbständige Bewegung des Flächenmaterials gesichert.

Wenn es dann z.B. zu einer Lockerung des Andrucks zwischen den Anpresselementen und dem Einsatzstück kommt durch ein leichtes Lösen der Anpresselemente und gleichzeitige Verschiebung des Einsatzstücks in Richtung des abgewinkelten Randes des Klemmvorrichtungskörpers, soweit, bis die Anschlagnase anliegt, wird das Herausfallen des Einsatzstücks aus dem Klemmvorrichtungskörper verhindert. Das Befestigungselement wird in dieser Position stets in den Durchbruch des Klemmvorrichtungskörpers eingefahren aber ohne diesen zu überragen. In dieser Lage wird die Montageeinheit "Befestigungselement - Flächenmaterial" transport- und manipulationsfähig und ermöglicht eine freie Bewegung des Flächenmaterials. Die Montageeinheit "Befestigungselement - Flächenmaterial" ist offen und beweglich. Die gesamte Montageeinheit "Befestigungselement - Flächenmaterial" befindet sich in einer nicht abgesicherten Lage.

Wie bereits erwähnt, verursacht die Manipulation mit dem Befestigungselement keine Materialbeschädigung durch das Bohren von Löchern bzw. eine anhaltende Fixierung an der Trägerbasis. Das erfmdungsgemäße Befestigungselement erlaubt eine Befestigung von Flächenmaterialien in allen Positionen gegenüber der Trägerbasis - sowohl horizontal, vertikal als auch schief diagonal. Die möglichen Anwendungen ergeben sich aus der angewendeten Art der Befestigung.

Die weitere Grundanwendungsmöglichkeit des erfindungsgemäßen Befestigungselements wird mittels der Anzahl der genutzten Befestigungselemente bestimmt. Bei der Anwendung von 3 und mehr Befestigungselementen entstehen verschiedene Wände. Bei der Anwendung von maximal 2 Befestigungselementen lassen sich verschiedene öffenbare Flächen wie z.B. Türen herstellen und gleichzeitig entsteht die Möglichkeit der Bildung von ausklappbaren Flächen bei gleichzeitiger Änderung der Winkel. Weiter besteht die Möglichkeit der Bildung von festen Wänden oder Flächen aus einer öffenbaren Wand oder Fläche, wenn die Stückzahl der Befestigungselemente erhöht wird.

Das erfindungsgemäße Befestigungselement ist bei der Befestigung von Flächenmaterialien verschiedener Beschaffenheit und Art, wie z.B. Glas, Holz, Metall, sowohl in voller als auch in perforierter Ausfertigung (verschiedene Siebe, Gitter und Strukturmaterialien) anwendbar.

Das erfindungsgemäße Befestigungselement bietet umfangreiche Möglichkeiten der Anwendung bei dem Herstellen von herausnehmbaren Flächen z.B. Einsätze für Ausstellungsstände, den Einsätzen in Möbelkonstruktionen, horizontale Flächen in dem Möbelbau, den herausnehmbaren Flächen, Türen, Wänden, Verglasungen, Trennwändem, leichten und mobilen Scheidewänden, Flächenbarrieren gegen Insekten, Nagetiere u.s.w., isolierflächen gegen Wind, Kälte, Sturmregen, kugelsicheren Schutzflächen, Licht- und Farbfiltern, Verdunkelungs- oder Sicherheitsflächen für die Fensterläden, Fenstersysteme für mobile Bauobjekte für den ambulanten Verkauf, Wärmedämmflächen, Heizungskörperverkleidungen, Kästen für Wasserleitungskonstruktionen, Dekorflächen, Informationstafeln, Ausfüllungspaneelen für Gelände, Unterdeckkasetten, Abdeckflächen und Lichtschirme für Beleuchtungskörper, Ausfüllungen für Ausstellungsstände, Ausstellungspaneelen, ferner bei der Schaffung von diagonal angebrachten Schutzflächen gegen die Sonnenstrahlung bzw. andere Strahlungen wie z.B. Sonnenstrahlungsbrecher, Werbepaneelen, leichten mobilen Bedachungen, abdeckungen für Notbeleuchtungskörper, drehbaren Konstruktionen für jalousienartige schwenkbar - drehbare Fenstersysteme und ferner in einer weiteren Reihe von Anwendungsmöglichkeiten.

Die oben erwähnten Anwendungsbeispiele beschränken in keiner Weise die möglichen Anwendungen des erfindungsgemäßen Befestigungselements.

### Kurze Beschreibung der Zeichnungen

Nachfolgend werden Ausführungsbeispiele der Erfindung anhand der beigefügten Zeichnungen erläutert.

Fig. 1 zeigt ein Befestigungselement, das aus einem Klemmvorrichtungskörper, einem Einsatzstück und den Anpresselementen besteht, in unabgesicherter Position

Fig. 2 zeigt ein Befestigungselement, das aus einem Klemmvorrichtungskörper, einem Einsatzstück und den Anpresselementen besteht, in abgesicherter Position

Fig. 3 zeigt eine Klemmvorrichtung des Befestigungselements, die u-förmig ausgebildet ist, wobei eine Seite einen zu der anderen Seitenwange hin abgewinkelten Rand und zwei Löcher für die Anpresselemente aufweist und in der Übergangspartie von einer Fläche in die andere mit den Durchbrüchen versehen ist, in die der Befestigungsansatz eingefahren werden kann

Fig. 4 zeigt ein Einsatzstück mit einem abgewinkelten Rand, einer darunterliegenden, von dem Einsatzstück vorstehenden Anschlagnase und einen, an der dem abgewinkelten Rand gegenüberliegenden Seite liegenden, Befestigungsansatz

Fig. 5 zeigt ein zusammengesetztes Befestigungselement mit befestigtem Flächenmaterial vor dem Einlegen der Montageeinheit "Befestigungselement - Flächenmaterial" in die Trägerbasis

Fig. 6 zeigt ein zusammengesetztes Befestigungselement mit befestigtem Flächenmaterial, das in die Trägerbasis eingelegt ist.

### Ausführung der Erfindung

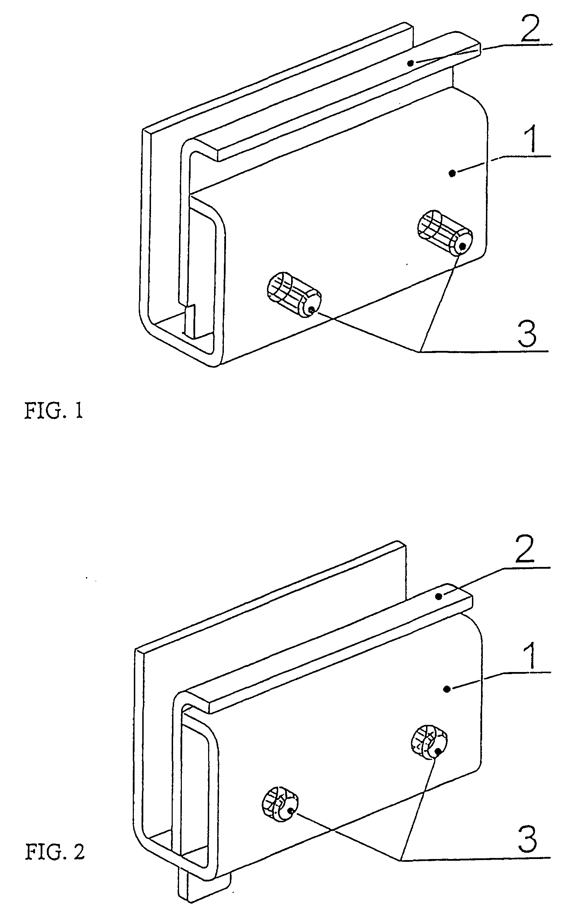

Fig. 1 zeigt ein erfindungsgemäßes Befestigungselement, das aus einem Klemmvorrichtungskörper 1, einem Einsatzstück 2 und den Anpresselementen 3 besteht, in derartiger gegenseitiger Position seiner Bestandteile, in der das Befestigungselement unabgesichert ist.

Fig. 2 zeigt ein erfindungsgemäßes Befestigungselement, das aus einem Klemmvorrichtungskörper 1, einem Einsatzstück 2 und den Anpresselementen 3 besteht, in derartiger gegenseitiger Position seiner Bestandteile, in der das Befestigungselement abgesichert ist.

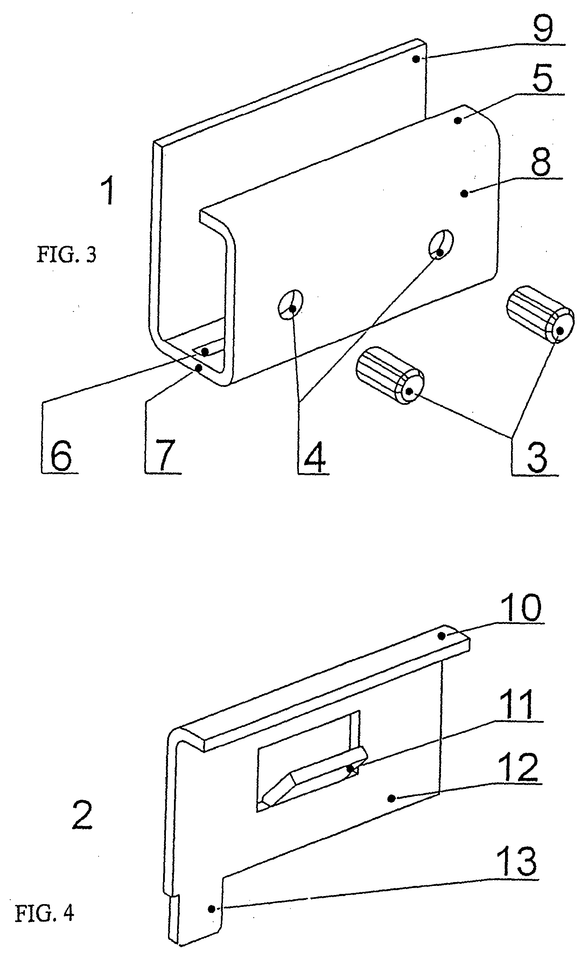

Fig. 3 zeigt einen Klemmvorrichtungskörper 1 von u-förmigem Querschnitt mit zwei gegenüberliegenden, den Schenkeln des "u" entsprechenden Seitenwangen, wobei die eine Seitenwange 9 länger ist als die andere Seitenwange 8 und die kürzere Seitenwange 8 einen abgewinkelten Rand 5 und Löcher 4 für die Anpresselemente 3 aufweist, wobei der Klemmvorrichtungskörper 1 in der Übergangspartie 7 zwischen den genannten Seiten 8 und 9 mit einem, dem Befestigungsansatz zugehörigen Durchbruch 6 versehen ist.

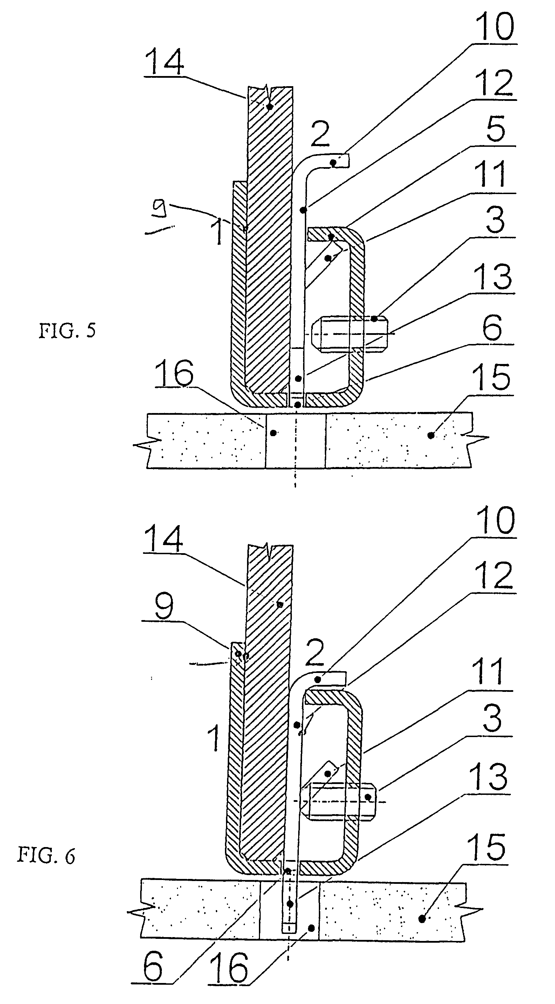

Fig. 4 zeigt ein Einsatzstück mit einem abgewinkelten Rand 10 auf der Seite 12, einer darunterliegenden, von dem Einsatzstück vorstehenden Anschlagnase 11 und einen, an der dem abgewinkelten Rand gegenüberliegenden Seite liegenden, Befestigungsansatz 13. Die Handhabung des erfindungsgemäßen Befestigungselements wird anhand der Figuren 5 und 6 näher erläutert.

Fig. 5 zeigt eine Befestigung des Flächenmaterials 14 mit dem erfindungsgemäßen Befestigungselement, wobei zwischen der Seite 9 des Klemmvorrichtungskörpers 1 und der Seite 12 des Einsatzstücks 2, das Flächenmaterial 14 eingelegt ist und zur Befestigung in die Trägerbasis 15 bereit ist, wobei die Trägerbasis ein beliebiges Material wie z.B. Rohrmaterial, beliebiges Profilmaterial, feste oder bewegliche Wände oder beliebiges Flächenmaterial sein kann, das mit einer Ausnehmung 16 versehen ist. Das Einsatzstück 2 befindet sich in der Position, bei welcher die Anschlagnase 11 von der unteren Seite des abgewinkelten Randes 5 des Klemmvorrichtungskörpers 1 berührt wird und der Befestigungsansatz 13 in den Durchbruch 6 eingesteckt ist und aus diesem nicht hinausragt. Im Falle, daß das Anpresselement 3 die Wand 12 des Einsatzstücks 2 gegen das Flächenmaterial 14 presst, ist die Montageeinheit "Befestigungselement - Flächenmaterial" transportfähig und kann an einem anderen Ort in die Trägerbasis 15 montiert werden als dem, an der die Montageeinheit gebildet wurde. Die Anpresskraft der Anpresselemente 3 wird nach konkretem Bedarf gewählt. Falls das Anpresselement 3 die Seite 12 des Einsatzstücks 2 nicht berührt, ist das Befestigungselement von dem Flächenmaterial leicht zu entfernen, bzw. an ihm beliebig zu verschieben. Die Montageeinheit befindet sich in nicht abgesicherter Lage.

Fig. 6 zeigt, ähnlich wie Fig. 5, eine Befestigung des Flächenmaterials 14, wobei sich das Einsatzstück 2 diesmal in einer derartigen Position befindet, daß der Befestigungsansatz 13 des Einsatzstücks 2 in den, dem Befestigungsansatz 13 zugehörigen Durchbruch 6 des Klemmvorrichtungskörpers 1 derart eingefahren ist, daß es aus dem Durchbruch 6 hinausragt und in die Ausnehmung 16 der Trägerbasis 15 hinübergreift und das Anpresselement 3, das Flächenmaterial zwischen der Seite 12 des Einsatzstücks 2 und der Seite 9 des Klemmvorrichtungskörpers 1 zusammenschließt. Die Montageeinheit "Befestigungselement - Flächenmaterial" ist in die Ausnehmung 16 der Trägerbasis 15 eingesteckt und zugleich abgesichert.

## Patentansprüche

1. Befestigungselement zum Befestigen von Flächenmaterialien mit einem Anpreßelement,
**dadurch gekennzeichnet, daß**
(a) das Befestigungselement einen Klemmvorrichtungskörper (1) von u-förmigen Querschnitt mit zwei gegenüberliegenden, den Schenkeln des "u" entsprechenden Seitenwangen (8,9) und einen Mittelteil (7) zwischen den Seitenwangen (8,9) aufweist, von denen die eine Seitenwange (8) kürzer ist als die andere (9) und einen zu der anderen Seitenwange (9) hin abgewinkelten Rand (5) aufweist;
(b) die kürzere Seitenwange (8) ein oder mehrere Löcher (4) für Anpreßelemente (3) aufweist,
(c) in dem Mittelteil (7) ein oder mehrere Durchbrüche (6) gebildet sind,
(d) das Befestigungselement weiterhin ein Einsatzstück (2) mit einem abgewinkelten Rand ((10), einer von dem Einsatzstück vorstehende Anschlagnase (11) und einem oder mehreren Befestigungsansätzen (13) aufweist, wobei die Anschlagnase (11) des Einsatzstücks (2) und der abgewinkelte Rand (10) zur gleichen Seite hin von dem Einsatzstück (2) vorstehen,
(e) wobei das Einsatzstück (2) zwischen die Seitenwangen (8,9) des Klemmvorrichtungskörpers (1) eingesetzt ist und die einen oder mehreren Befestigungsansätze (13) im Bedarfsfall durch die Durchbrüche (6) hindurch in eine Ausnehmung (16) einer Trägerbasis (15) einsteckbar sind.

## Claims

1. Fixing element for affixing sheet material, comprising a clamping element,
**characterised in that**
(a) the clamping element comprises a clamping device body (1) of u-shaped cross section having two opposite side cheeks (8,9) corresponding to the legs of the "u" and a central portion (7) between the side cheeks (8,9), one of the side cheeks (8) being sharter than the other one (9) and having a bent-off edge (5);
(b) the shorter side cheek (8) has one or more holes (4) for clampig elements (3);
(c) one or more apertures are formed in the central portion (7);
(d) the fixing element, furthermore, comprises an insert piece (2) having a bent-off edge (10), a stop lug (11) projecting from the insert piece and one or more affixing projections (13), the stop lug (11) of the insert piece (2) and the bent-of edge (10) projecting from the insert piece (2) on the same side,
(e) the insert piece (2) being inserted between the side cheeks (8,9) of the clamping device body (1) and the one or more affixing projections (13), if required, can be inserted theough the apertures (6) into a recess (16) of a carrier base (15).

## Revendications

1. Élément de fixation destiné à fixer des matériaux de surface à l'aide d'un élément de pression, **caractérisé par le fait que**
(a) l'élément de fixation présente un organe de dispositif de serrage (1) muni d'une coupe transversale en forme de U ainsi que de deux faces latérales opposées correspondant au "U", et un élément médian (7) situé entre les faces latérales (8,9) dont l'une (8) est plus courte que l'autre (9) et présente un bord (5) plié vers l'autre face latérale (9),
(b) la face latérale la plus courte (8) présente un ou plusieurs trous (4) pour éléments de pression (3),
(c) un ou plusieurs percements (6) sont formés dans l'élément médian (7),
(d) l'élément de fixation présente en outre un insert (2) muni d'un bord plié (10), d'une came de butée (11) faisant saillie par rapport à l'insert et d'un ou de plusieurs talons de fixation (13), la came de butée (11) de l'insert (2) et le bord plié (10) faisant saillie vers le même côté par rapport à l'insert (2),
(e) l'insert (2) étant inséré entre les faces latérales (8,9) de l'organe de dispositif de serrage (1) et un ou plusieurs talons de fixation (13) étant susceptibles d'être insérés en cas de besoin à travers les percements (6) à l'intérieur d'un creux (16) d'un support (15).
